# EUROPÄISCHE PATENTANMELDUNG

(11) **EP 2 227 070 A2**
(43) Veröffentlichungstag der Anmeldung: **08.09.2010**
(21) Anmeldenummer: 10155119.0
(22) Anmeldetag: 02.03.2010
(51) Int. Cl.: H05B 41/02, H05B 41/04

(54) **Zündgerät für eine Hochdruckgasentladungslampe**

(30) Priorität: 06.03.2009 DE 102009012089
(71) Anmelder: Hella KGaA Hueck & Co., 59552 Lippstadt (DE)
(72) Erfinder: Bewermeyer, Frank, 33161, Hövelhof (DE); Kanne, Gideon, 59590, Geseke (DE)

(57) **Zusammenfassung**

Ein Zündgerät für eine Hochdruckgasentladungslampe soll für eine automatische Fertigung optimiert werden. Ein Zündtransformator soll einfach und mit geringem Aufwand befestigt werden können; die Gefahr einer Bildung von freiem Kohlenstoff beim Befestigen soll vermieden werden. Hierfür wird vorgeschlagen, dass ein für die Verbindung bestimmtes Ende des ersten Kontaktblechs eine trichterförmige Einbuchtung aufweist und dass der Kontaktdraht in die Einbuchtung biegbar ist.

## Beschreibung

Die Erfindung betrifft ein Zündgerät für eine Hochdruckgasentladungslampe gemäß dem Oberbegriff des Anspruchs 1.

In Kraftfahrzeugen werden für Frontscheinwerfer wegen der besseren Lichtausbeute vermehrt Hochdruckgasentladungslampen wie z.B. Xenonlampen eingesetzt. Diese Lampen benötigen zum Starten eine hohe Zündspannung von mehreren kV, die als Spannungsimpuls in einem Zündgerät erzeugt wird. Diese Zündgeräte umfassen ein Gehäuse, in dem ein Zündtransformator und eine Leiterplatte mit elektrischen/ elektronischen Bauteilen und Schaltungen befestigt sind. Dem Zündgerät ist gewöhnlich ein Vorschaltgerät vorgeschaltet.

Solche Zündgeräte sind an sich bekannt. Das Einsetzen des Zündtransformators nach dem Stand der Technik ist relativ aufwändig. Insbesondere gelangt beim Verschweißen eines Hochspannung führenden ersten Kontaktblechs mit einem Kontaktdraht zu einem Lampensockel mittels Laser ein Teil der Laserstrahlung an das Gehäuse. Hierdurch wird das Material des Gehäuses zersetzt, wodurch sich freier Kohlenstoff bildet. Dieser Kohlenstoff kann beim Betrieb des Zündgeräts zu Überschlägen von Hochspannung führen.

Die DE 103 39 587 A1 beschreibt einen Lampensockel mit einem Zündtransformator für eine Hochdruckgasentladungslampe. Der Zündtransformator umfasst ein Gehäuse, das mindestens eine Wicklung umschließt. Zum lagerichtigen Einbau des Transformators in den Lampensockel ist der Zündtransformator an seiner Außenseite mit Stegen versehen. Der Lampensockel weist entsprechende Nuten sowie Anstandhalter auf. Der Zündtransformator soll auf diese Weise für einen automatischen Einbau in den Lampensockel und für eine automatisierte Kontaktierung geeignet sein. Diese Kontaktierung ist nicht näher beschrieben.

Aus der DE 10 2004 044 368 A1 ist eine Zündvorrichtung mit einem Zündtransformator für eine Hochdruckgasentladungslampe bekannt, bei dem eine Sekundärwicklung von einem Metallband gebildet ist. Dieses ist so auf einem ringförmigen Ferritkern angeordnet, dass ein Hochspannung führendes Ende der Sekundärwicklung innen liegend angeordnet ist. Auf diese Weise soll der Zündtransformator verbessert werden. Eine automatisierte Fertigung ist schwierig und aufwändig.

In der DE 20 2005 007 484 U1 ist ein Zündtransformator für eine Gasentladungsleuchte mit einem offenen, nicht geradlinigen magnetischen Kern und einem Spulenkörper offenbart, der auf dem Kern aufgebracht ist und mehrere Kammern zur Aufnahme einer Sekundärwicklung aufweist. Auf diese Weise soll bei kompakter Bauweise die Flexibilität bei der Auslegung des Zündtransformators erzielt werden. Der Zündtransformator ist aufwändig und nur schwer automatisch zu fertigen.

Aufgabe der Erfindung ist es, ein Zündgerät für eine Hochdruckgasentladungslampe zu schaffen, bei dem ein Zündtransformator einfach und ohne Gefahr der Entstehung von freiem Kohlenstoff in einem Gehäuse befestigt und kontaktiert werden kann.

Die Aufgabe ist durch die Merkmale des Anspruchs 1 gelöst. Ein für die Verbindung bestimmtes Ende des ersten Kontaktblechs weist eine in der Ansicht trichterförmige Einbuchtung auf und der Kontaktdraht ist in die Einbuchtung plastisch biegbar. Beim Biegen zentriert sich der Kontaktdraht durch die Form der Einbuchtung selbst. Hierdurch weist der Kontaktdraht nach dem Biegen an mindestens zwei Stellen seines Umfangs direkten Kontakt mit dem ersten Kontaktblech auf. An diesen Stellen kann ein Verschweißen mittels Laser erfolgen, ohne dass Strahlen auf das Gehäuse treffen. Auf diese Weise wird der Zündtransformator in dem Gehäuse befestigt und kontaktiert, ohne dass eine Gefahr der Entstehung von freiem Kohlenstoff besteht. Damit werden im Betrieb Überschläge von Hochspannung sicher vermieden und die Betriebssicherheit und Lebensdauer des Zündgeräts erhöht. Die automatisierte Fertigung des Zündgeräts wird insgesamt erleichtert.

Die Unteransprüche betreffen die vorteilhafte Ausgestaltung der Erfindung.

In einer Alternative entspricht eine kleinste Weite der Einbuchtung einem Querschnitt des Kontaktdrahts. Dies bewirkt eine Vergrößerung der Kontaktfläche zwischen dem Kontaktdraht und dem ersten Kontaktblech und somit eine bessere Befestigung und einen geringeren elektrischen Widerstand.

Besonders vorteilhaft ist es, wenn die kleinste Weite der Einbuchtung zusätzlich hinterschnitten ist; das bedeutet, dass die kleinste Weite noch eine kleine Einschnürung aufweist. Hierdurch wird der Kontaktdraht auch ohne weitere Befestigung in der Einbuchtung gehalten.

In eine weiteren Alternative ist ein Querschnitt des Kontaktdrahts rund und ein inneres Ende der Einbuchtung halbkreisförmig ausgebildet. Hierbei ist eine Anpassung der Formen besonders einfach und somit die Gefahr des Auftreffens von Laserstrahlen auf das Gehäuse stark reduziert.

Wenn gemäß einer weiteren Ausbildung der Kontaktdraht aus einem Nickelgrundwerkstoff gefertigt ist, lässt er sich bei ansonsten ausreichender Stabilität einfach umbiegen und verbleibt in der gebogenen Position.

Anhand der schematischen Zeichnung wird die Erfindung nachfolgend näher erläutert. Dabei zeigt:
Figur 1 eine Draufsicht auf ein Zündgerät mit eingesetztem Zündtransformator,
Figur 2 einen Schnitt A - A gemäß der Figur 1 und
Figur 3 eine perspektivische Ansicht des Zündtransformators als Detail.

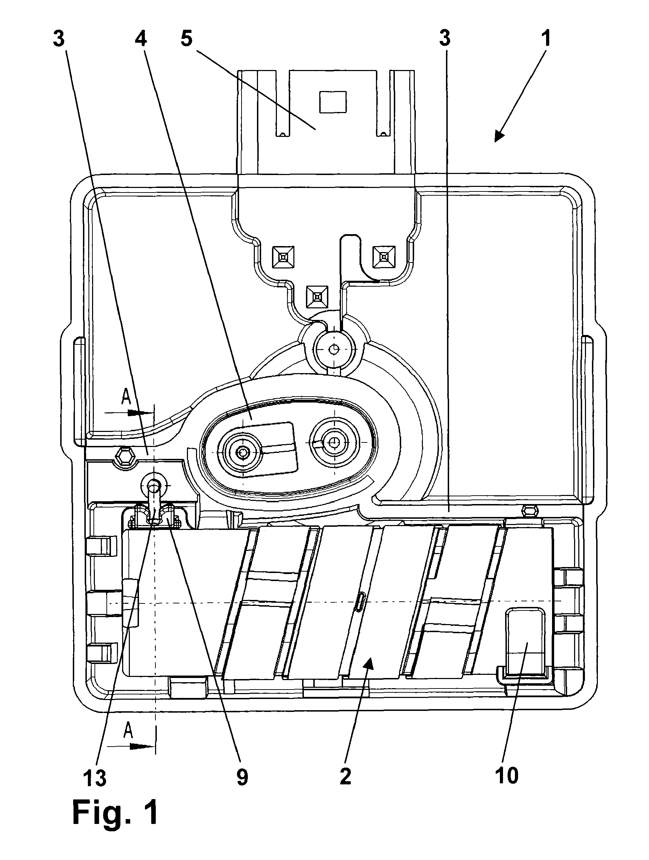

Wie aus der Figur 1 ersichtlich umfasst ein Zündgerät für eine Hochdruckgasentladungslampe ein quaderförmiges Gehäuse 1, einen Zündtransformator 2 und eine nicht dargestellte Leiterplatte. Das Gehäuse 1 ist aus einem elektrisch nicht leitenden Material wie z.B. Kunststoff gefertigt, mittels einer Wand 3 quergeteilt und mittels eines nicht dargestellten Deckels verschlossen. In einem ersten, nach der Figur 1 unteren Teil des Gehäuses 1 ist der Zündtransformator 2 gelagert. In den anderen Teil ragen elektrische und/oder elektronische Bauteile, die auf der Leiterplatte befestigt sind. Weiterhin ist in dem anderen Teil ein Lampensockel 4 angeordnet. Die Leiterplatte ist parallel zu den Hauptflächen des Gehäuses 1 in diesem gelagert. Für einen elektrischen Anschluss des Zündgeräts ist an dem Gehäuse 1 ein Stecker 5 ausgebildet, der mit der Leiterplatte kontaktiert ist.

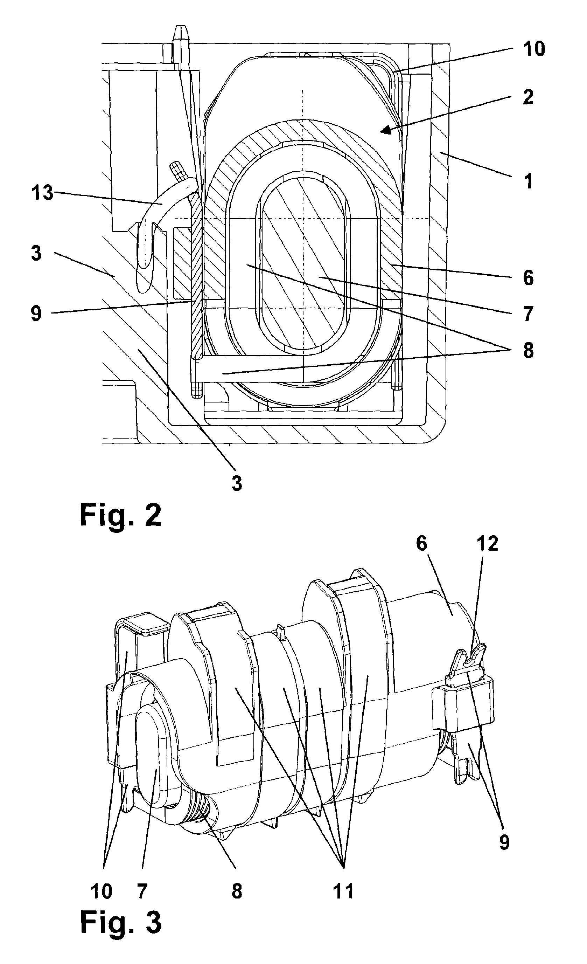

Wie aus den Figuren 2 und 3 deutlich wird, weist der Zündtransformator 2 ein Transformatorgehäuse 6 auf, in dem ein Kern 7 aus weichmagnetischem Material und eine Sekundärwicklung 8 gelagert sind. Mit einem im Betrieb Hochspannung führenden ersten Ende der Sekundärwicklung 8 ist ein erstes Kontaktblech 9 verbunden, das an einem entsprechenden Ende des Transformatorgehäuses 6 befestigt ist. Ein zweites Ende der Sekundärwicklung ist mit einem zweiten Kontaktblech 10 verbunden. Um das Transformatorgehäuse 6 ist eine Primärwicklung 11 gewickelt.

Das erste Kontaktblech 9 weist an einem nach den Figuren 2 und 3 oberen Ende, das der Verbindung mit der Sekundärwicklung 8 gegenüber liegt, eine trichterförmige Einbuchtung 12 auf. Diese ist zu einer Schmalseite des ersten Kontaktblechs 9 offen und weist gerundete seitliche Flanken sowie ein halbkreisförmiges inneres Ende auf. Im Bereich des inneren Endes ist die Einbuchtung 12 hinterschnitten. Das erste Kontaktblech 9 ist zwischen der Befestigung an dem Transformatorgehäuses 6 und der Einbuchtung 12 um circa 30° von dem Transformatorgehäuses 6 weg umgebogen.

In dem Gehäuse 1 ist ein Kontaktdraht 13 so befestigt, dass er von dem Lampensockel 4 in den ersten Teil des Gehäuses 1 führt und zunächst senkrecht zu einem Boden des Gehäuses 1 in den ersten Teil ragt. Hierbei endet der Kontaktdraht 13 an einer Stelle, die bei eingesetztem Zündtransformator 2 im Bereich des ersten Kontaktblechs 9 liegt. Eine Längsachse des ersten Kontaktblechs 9 und eine Längsachse des in den ersten Teil ragenden Kontaktdrahts 13 befinden sich auf einer Senkrechten zu einer Längsachse des Zündtransformators 2.

Zur vollautomatischen Montage des Zündgeräts wird der Zündtransformator 2 in das Gehäuse 1 eingesetzt. Der Kontaktdraht 13 wird so in die Einbuchtung 12 gebogen, dass er von der Hinterschneidung gehalten ist und das erste Kontaktblech 9 möglichst weitgehend berührt. Anschließend wird der Kontaktdraht 13 mittels Laserschweißen an dem ersten Kontaktblech 9 befestigt. Der Zündtransformator 2 und teilweise der erste Teil des Gehäuses 1 werden mit Vergussmasse verfüllt. Die Leiterplatte wird auf das Gehäuse 1 aufgesetzt und befestigt. Hierbei liegen entsprechende Kontaktflächen der Leiterplatte an Endbereichen der Primärwicklung sowie an dem zweiten Kontaktblech 10 an. Die Endbereiche und das zweite Kontaktblech 10 bilden weitere elektrische Anschlüsse des Zündtransformators 2. Die Kontaktflächen einerseits sowie die Endbereiche der Primärwicklung und das zweite Kontaktblech andererseits werden mittels Laserschweißen miteinander verbunden. Schließlich wird das Gehäuse 1 mit dem Deckel verschlossen.

### Bezugszeichenliste

- 1: Gehäuse
- 2: Zündtransformator
- 3: Wand
- 4: Lampensockel
- 5: Stecker
- 6: Transformatorgehäuse
- 7: Kern
- 8: Sekundärwicklung
- 9: erstes Kontaktblech
- 10: zweites Kontaktblech
- 11: Primärwicklung
- 12: Einbuchtung
- 13: Kontaktdraht

## Patentansprüche

1. Zündgerät für eine Hochdruckgasentladungslampe, umfassend ein Gehäuse (1), in dem ein Lampensockel (4) angeordnet ist,
einen Zündtransformator (2), dessen Hochspannung führendes Ende einer Sekundärwicklung (8) über ein erstes Kontaktblech (9) mit einem Kontaktdraht (13) des Lampensockels (4) verbindbar ist, und
eine Leiterplatte mit elektrischen und/oder elektronischen Bauteilen und Schaltungen,
**dadurch gekennzeichnet, dass** ein für die Verbindung bestimmtes Ende des ersten Kontaktblechs (9) eine trichterförmige Einbuchtung (12) aufweist und dass der Kontaktdraht (13) in die Einbuchtung (12) plastisch biegbar ist.

2. Zündgerät nach Anspruch 1, **dadurch gekennzeichnet, dass** eine kleinste Weite der Einbuchtung (12) einem Querschnitt des Kontaktdrahts (13) entspricht.

3. Zündgerät nach Anspruch 1 oder 2, **dadurch gekennzeichnet, dass** ein inneres Ende der Einbuchtung (12) hinterschnitten ist.

4. Zündgerät nach einem der Ansprüche 1 bis 3, **dadurch gekennzeichnet, dass** ein Querschnitt des Kontaktdrahts (13) rund und ein inneres Ende der Einbuchtung (12) halbkreisförmig ausgebildet ist.

5. Zündgerät nach einem der Ansprüche 1 bis 4, **dadurch gekennzeichnet, dass** der Kontaktdraht (13) aus einem Nickelgrundwerkstoff gefertigt ist.
